# EUROPEAN PATENT APPLICATION

(11) **EP 4 393 771 A1**
(43) Date of publication of application: **03.07.2024**
(21) Application number: 22860448.4
(22) Date of filing: 22.08.2022
(51) Int. Cl.: B60N 2/16, B60N 2/18, F16H 57/12, F16H 55/18

(54) **ADJUSTING MECHANISM, SEAT, AND VEHICLE**

(30) Priority: 24.08.2021 CN 202122005130 U
(71) Applicant: Beijing CHJ Information Technology Co., Ltd., Beijing 101399 (CN)
(72) Inventor: ZHU, Feng, Beijing 101399 (CN)
(74) Representative: Maiwald GmbH
(86) International application number: PCT/CN2022/114012
(87) International publication number: WO 2023/025102

(57) **Abstract**

Provided are an adjusting mechanism, a seat, and a vehicle. The adjusting mechanism comprises a driving gear (10), a first toothed plate (11) and a second toothed plate (12), wherein the first toothed plate (11) is provided with a first tooth-shaped structure (111), and the second toothed plate (12) is provided with a second tooth-shaped structure (121); the first tooth-shaped structure (111) and the second tooth-shaped structure (121) are arranged side by side, and both the first tooth-shaped structure (111) and the second tooth-shaped structure (121) mesh with the driving gear (10); and a reset assembly is arranged between the first toothed plate (11) and the second toothed plate (12), and is used for enabling the second toothed plate (12) to tend to rotate relative to the first toothed plate (11).

## Description

### CROSS-REFERENCE TO RELATED APPLICATION

This application is based on and claims the priority to Chinese Patent Application Serial No. 202122005130.2, filed on August 24, 2021, the entire content of which is incorporated herein by reference.

### FIELD

The present disclosure relates to the field of vehicles, and more particularly to an adjusting mechanism, a seat, and a vehicle.

### BACKGROUND

With the rapid development of the national economy, cars have gradually become one of the main means of transportation in our country. Car seats are an important part that affects comfort, aesthetics and NVH performance. Furthermore, with the continuous improvement of people's demands for quality of life, higher requirements are constantly being put forward for the design of car seats.

In order to meet the driving vision and postural comfort needs of drivers with various sizes, driving seats of cars are typically equipped with an adjusting mechanism for seats. In an adjusting mechanism for a traditional seat, a single toothed plate is driven by a height-adjusting motor, and height adjustment of the seat is driven by an angle change of the toothed plate. This design needs to be ensured by a high level of assembly accuracy. After the adjusting mechanism of the seat is used for a long time, it often happens that a center distance between a driving gear and the single toothed plate becomes large, to increase a clearance, thus easily causing shaking and abnormal sound of the adjusting mechanism.

### SUMMARY

In order to solve the above technical problems or at least partially solve the above technical problems, the present disclosure provides an adjusting mechanism, a seat, and a vehicle.

A first aspect of the present disclosure provides an adjusting mechanism, including: a driving gear, a first toothed plate, and a second toothed plate;
in which the first toothed plate is provided with a first tooth-shaped structure, the second toothed plate is provided with a second tooth-shaped structure, the first tooth-shaped structure and the second tooth-shaped structure are arranged side by side, and both the first tooth-shaped structure and the second tooth-shaped structure mesh with the driving gear; and
in which a reset assembly is arranged between the first toothed plate and the second toothed plate, and is configured to allow the second toothed plate to tend to rotate relative to the first toothed plate.

In some embodiments, the reset assembly includes a torsion spring including a first leg and a second leg; and
the first leg is connected to the first toothed plate, and the second leg is connected to the second toothed plate, such that a torque of the torsion spring enable the second toothed plate to tend to rotate relative to the first toothed plate.

In some embodiments, the reset assembly comprises a first pin shaft, a second pin shaft, and a spring; the first pin shaft is connected to the first toothed plate, the second pin shaft is connected to the second toothed plate, and two ends of the spring are connected to the first pin shaft and the second pin shaft, respectively, such that the second toothed plate tends to rotate relative to the first toothed plate under the tension or elasticity of the spring.

In some embodiments, the first toothed plate defines a first avoidance hole arranged opposite to the second pin shaft;
and/or, the second toothed plate defines a second avoidance hole arranged opposite to the first pin shaft.

In some embodiments, the adjusting mechanism further includes a rear transverse tube, the first toothed plate and the second toothed plate are arranged at intervals in an extension direction of the rear transverse tube;
an axis of the first pin shaft and an axis of the rear transverse tube are coplanar and form a first plane;
an axis of the second pin shaft and the axis of the rear transverse tube are coplanar and form a second plane; and
an angle between the first plane and the second plane is greater than 0 °.

In some embodiments, the first toothed plate is fixedly connected to the rear transverse tube; and the second toothed plate is rotatably connected to the rear transverse tube.

In some embodiments, a tooth profile of the first tooth-shaped structure and a tooth profile of the second tooth-shaped structure are identical.

In some embodiments, an adjusting member is arranged between the first toothed plate and the second toothed plate, and the adjusting member is configured to allow the second toothed plate to tend to move upwards relative to the first toothed plate.

A second aspect of the present disclosure provides a seat, including: a base, a seat frame, and the adjusting mechanism;
in which two ends of the rear transverse tube are rotatably connected to side plates of the seat frame, respectively;
an end of the first toothed plate away from the rear transverse tube and an end of the second toothed plate away from the rear transverse tube are rotatably connected to the base; and
the driving gear is arranged on the seat frame.

A third aspect of the present disclosure provides a vehicle, including the seat.

The adjusting mechanism provided by embodiments of the present disclosure includes: the driving gear, the first toothed plate, and the second toothed plate; the first toothed plate is provided with the first tooth-shaped structure, the second toothed plate is provided with the second tooth-shaped structure, the first tooth-shaped structure and the second tooth-shaped structure are arranged side by side, and both the first tooth-shaped structure and the second tooth-shaped structure mesh with the driving gear. The reset assembly is arranged between the first toothed plate and the second toothed plate, and applies the tension to the first toothed plate and the second toothed plate, such that the second toothed plate tends to rotate relative to the first toothed plate.

The first toothed plate and the second toothed plate move towards each other through the reset assembly, thus a closed point is formed between the second toothed plate and the driving gear when meshing. In this state, the first toothed plate and the driving gear have one closed point, the second toothed plate and the driving gear have one closed point, and under the joint action of the first toothed plate and the second toothed plate, the clearance of the mechanism may be eliminated. Even after a long period of time, the first toothed plate and the second toothed plate are tensioned by a redundant pretightening force of the reset assembly, such that an assembly clearance may meet the design requirements, thereby solving the problem of shaking and abnormal sound under adjustment.

In other words, by arranging the reset assembly between the first toothed plate and the second toothed plate, the second toothed plate may generate the torque, such that the first tooth-shaped structure and the second tooth-shaped structure clamp the teeth on the driving gear, that is, the teeth on the driving gear tightly mesh with the first tooth-shaped structure and the second tooth-shaped structure, thus the effect of eliminating the clearance may be achieved and the possibility of loosening is reduced. The fit clearance between the traditional toothed plate structure and the driving gear for height adjustment is compensated by the first toothed plate and the second toothed plate cooperating with the reset assembly, and even after a long period of time, it may still be compensated by angles of the first toothed plate and the second toothed plate, reducing the probability of the shaking and abnormal sound problem of the seat occurring under height adjustment.

The adjusting mechanism provided by embodiments of the present disclosure has high scalability in the traditional seat structure. The first toothed plate, the second toothed plate, and the reset assembly occupy small space, which is suitable for seats of a wide range of car models and has high practicality.

### BRIEF DESCRIPTION OF THE DRAWINGS

The drawings herein are incorporated into the specification and form a part of the specification, show embodiments that comply with the present disclosure, and are used to explain the principles of the present disclosure together with the specification.

In order to more clearly explain the technical solution of embodiments of the present disclosure or the related art, the drawings required to be used in the description of embodiments or the related art will be briefly described below, and it is obvious for those skilled in the art that other drawings may be obtained according to these drawings without creative labor.
FIG. 1 is a structural schematic diagram of an adjusting mechanism according to an embodiment of the present disclosure; and
FIG. 2 is a structural schematic diagram of a seat according to an embodiment of the present disclosure.

References signs: driving gear 10; first toothed plate 11; first tooth-shaped structure 111; first avoidance hole 112; second toothed plate 12; second tooth-shaped structure 121; second avoidance hole 122; rear transverse tube 20; first pin shaft 31; second pin shaft 32; spring 33; base 40; seat frame 50.

### DETAILED DESCRIPTION

In order to more clearly understand the purpose, features and advantages of the present disclosure, the technical solution of the present disclosure will be further described below. It should be noted that embodiments of the present disclosure and the features in the embodiments may combine with each other without conflict.

In order to fully understand the present disclosure, many specific details are explained in the following description, but the present disclosure may also be implemented in other ways different from those described herein; obviously, the embodiments in the description are only a part of embodiments of the present disclosure, not all of them.

In an adjusting mechanism of a traditional seat, a single toothed plate is driven by a height-adjusting motor, and a height adjustment function of the seat is driven by an angle change of the toothed plate. This design needs to be ensured by a high level of assembly accuracy. After the adjusting mechanism of the seat is used for a long time, it often happens that a center distance between a driving gear and the single toothed plate becomes large, to increase a clearance, thus easily causing the shaking and abnormal sound of the adjusting mechanism. Accordingly, embodiments of the present disclosure provide an adjusting mechanism, a seat, and a vehicle, which may improve fit clearance between the toothed plate for height adjustment and the driving gear for height adjustment, thereby reducing the shaking of the adjusting mechanism in the process of height adjustment.

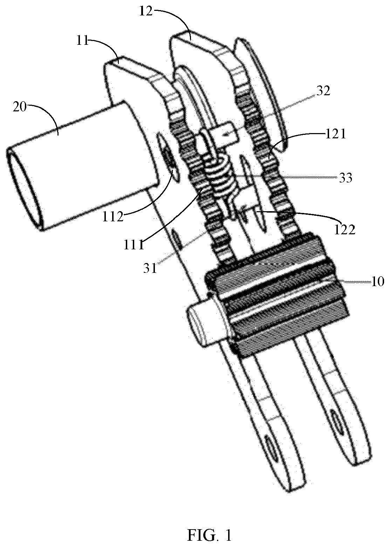

As illustrated in FIG. 1, the adjusting mechanism provided in embodiments of the present disclosure includes: a driving gear 10, a first toothed plate 11, and a second toothed plate 12. The first toothed plate 11 and the second toothed plate 12 may be arranged on a rear transverse tube, and may be rotated along an axial direction of the rear transverse tube as a rotational axis. The first toothed plate 11 and the second toothed plate 12 are arranged in parallel. The first toothed plate 11 is provided with a first tooth-shaped structure 111, and the second toothed plate 12 is provided with a second tooth-shaped structure 121. The first tooth-shaped structure 111 and the second tooth-shaped structure 121 are arranged side by side, and both the first tooth-shaped structure 111 and the second tooth-shaped structure 121 mesh with the driving gear 10.

A reset assembly is arranged between the first toothed plate 11 and the second toothed plate 12, and the reset assembly is configured to allow the second toothed plate 12 to tend to rotate relative to the first toothed plate 11. Optionally, the reset assembly may apply tension or elasticity to the first toothed plate 11 and the second toothed plate 12, and optionally, the reset assembly is connected to the first toothed plate 11 and the second toothed plate 12, such that the second toothed plate 12 tends to rotate relative to the first toothed plate 11. The first toothed plate 11 and the second toothed plate 12 move towards each other through the reset assembly, such that a closed point is formed between the second toothed plate 12 and the driving gear 10 when meshing. In this state, the first toothed plate 11 and the driving gear 10 have one closed point, the second toothed plate 12 and the driving gear 10 have one closed point, and under the joint action of the first toothed plate 11 and the second toothed plate 12, the clearance of the mechanism may be eliminated. Even after a long period of time, the first toothed plate 11 and the second toothed plate 12 are tensioned by the redundant pretightening force of the reset assembly, such that assembly clearance may meet the design requirements, thereby solving the problem of shaking and abnormal sound under adjustment.

In other words, by arranging the reset assembly between the first toothed plate 11 and the second toothed plate 12, the second toothed plate 12 may generate a torque, such that the first tooth-shaped structure 111 and the second tooth-shaped structure 121 clamp teeth on the driving gear 10, that is, the teeth on the driving gear 10 tightly mesh with the first tooth-shaped structure 111 and the second tooth-shaped structure 121, thus the effect of eliminating the clearance may be achieved and the possibility of loosening is reduced. The fit clearance between the traditional toothed plate structure and the driving gear 10 for height adjustment is compensated by the first toothed plate 11 and the second toothed plate 12 cooperating with the reset assembly, and even after a long period of time, it may still be compensated by angles of the first toothed plate 11 and the second toothed plate 12, reducing the probability of the shaking and abnormal sound problem of the adjusting mechanism for the seat occurring.

The adjusting mechanism provided by embodiments of the present disclosure has high scalability in a traditional seat structure. The first toothed plate 11, the second toothed plate 12, and the reset assembly occupy small space, which may be suitable for a wide range of car models and has high practicality.

In some embodiments, the adjusting mechanism further includes the rear transverse tube 20; the first toothed plate 11 and the second toothed plate 12 are arranged at intervals in an extension direction of the rear transverse tube 20, and the first toothed plate 11 is fixedly connected to the rear transverse tube 20. Optionally, the first toothed plate 11 is welded or riveted with the rear transverse tube 20. The second toothed plate 12 is rotatably connected to the rear transverse tube 20. Optionally, the rear transverse tube 20 is provided with a first protrusion and a second protrusion, the first protrusion and the second protrusion are arranged at intervals and extend along a circumferential direction of the rear transverse tube 20, an mounting hole is defined on the second toothed plate 12, the rear transverse tube 20 passes through the mounting hole, and the second toothed plate 12 is arranged between the first protrusion and the second protrusion, such that the second toothed plate 12 may be rotated relative to the rear transverse tube 20, that is, the second toothed plate 12 may be rotated relative to a structure comprised of the first toothed plate 11 and the rear transverse tube 20. Optionally, the rear transverse tube 20 may define a groove, and the second toothed plate 12 is arranged in the groove, such that the second toothed plate 12 may be rotated relative to the rear transverse tube 20. Optionally, the groove may be arranged between the first protrusion and the second protrusion, or the groove may also be defined by the first protrusion and the second protrusion.

The reset assembly is connected to the first toothed plate 11 and the second toothed plate 12, such that the second toothed plate 12 may rotate around the rear transverse tube 20, and then the second toothed plate 12 tends to rotate relative to the first toothed plate 11, such that the second toothed plate 12 generates a torque with respect to an axis of the rear transverse tube 20, thus the first tooth-shaped structure 111 and the second tooth-shaped structure 121 may clamp the teeth on the driving gear 10, that is, the teeth on the driving gear 10 tightly mesh with the first tooth-shaped structure 111 and the second tooth-shaped structure 121, thus the effect of eliminating the clearance may be achieved and the possibility of loosening is reduced. The fit clearance between the traditional toothed plate structure and the driving gear 10 for height adjustment is compensated by the first toothed plate 11 and the second toothed plate 12 cooperating with the reset assembly, and even after a long period of time, it may still be compensated by angles of the first toothed plate 11 and the second toothed plate 12, reducing the probability of the shaking and abnormal sound problem of the seat occurring under height adjustment.

In some embodiments, the reset assembly includes a torsion spring, the torsion spring includes a first leg and a second leg, the first leg is connected to the first toothed plate 11, and the second leg is connected to the second toothed plate 12, such that a torque of the torsion spring enables the second toothed plate 12 to tend to rotate relative to the first toothed plate 11. Under the action of the torque of the torque spring, the second toothed plate 12 may generate a torque, thus the first tooth-shaped structure 111 and the second tooth-shaped structure 121 clamp the teeth on the driving gear 10, that is, the teeth on the driving gear 10 tightly mesh with the first tooth-shaped structure 111 and the second tooth-shaped structure 121, thus the effect of eliminating the clearance may be achieved and the possibility of loosening is reduced.

In some embodiments, the reset assembly includes a first pin shaft 31, a second pin shaft 32, and a spring 33; the first pin shaft 31 is connected to the first toothed plate 11, and optionally, the first pin shaft 31 may be connected to the first toothed plate 11 by welding or riveting. The second pin shaft 32 is connected to the second toothed plate 12, and optionally, the second pin shaft 32 may be connected to the second toothed plate 12 by welding or riveting. Two ends of the spring 33 are connected to the first pin shaft 31 and the second pin shaft 32, respectively, such that the second toothed plate 12 tends to rotate relative to the first toothed plate 11 under the tension or elasticity of the spring 33. The two ends of the spring 33 are connected to the first pin shaft 31 and the second pin shaft 32, respectively, such that the spring 33 keeps in a stretched state. When the tension of the spring 33 is applied on the second pin shaft 32, the second toothed plate 12 will generate the torque with respect to the axis of the rear transverse tube 20, such that the first tooth-shaped structure 111 and the second tooth-shaped structure 121 may clamp the teeth on the driving gear 10, that is, the teeth on the driving gear 10 tightly mesh with the first tooth-shaped structure 111 and the second tooth-shaped structure 121, thus the effect of eliminating the clearance may be achieved and the possibility of loosening is reduced.

In some embodiments, an axis of the first pin shaft 31 and the axis of the rear transverse tube 20 are coplanar and form a first plane; an axis of the second pin shaft 32 and the axis of the rear transverse tube 20 are coplanar and form a second plane; an angle between the first plane and the second plane is greater than 0 °, and an optimal angle between the first plane and the second plane is an acute angle, which allows the tension of the spring 33 to generate the torque with respect to the axis of the rear transverse tube 20 on the second toothed plate 12, such that the first tooth-shaped structure 111 and the second tooth-shaped structure 121 may jointly clamp the teeth on the driving gear 10, that is, the teeth on the driving gear 10 tightly mesh with the first tooth-shaped structure 111 and the second tooth-shaped structure 121, thus the effect of eliminating the clearance may be achieved and the possibility of loosening is reduced.

In some embodiments, the first toothed plate 11 defines a first avoidance hole 112 arranged opposite to the second pin shaft 32, and the second toothed plate 12 defines a second avoidance hole 122 arranged opposite to the first pin shaft 31, such that when the second toothed plate 12 is rotated along the axis of the rear transverse tube 20, the second pin shaft 32 or the first pin shaft 31 will not interfere with the rotation of the second toothed plate 12. The first avoidance hole 112 may be a slotted curved hole arranged along a rotation direction of the first toothed plate 11 with respect to the axis of the rear transverse tube 20. The second avoidance hole 122 may be a slotted curved hole arranged along a rotation direction of the second toothed plate 12 with respect to the axis of the rear transverse tube 20.

In some embodiments, a tooth profile of the first tooth-shaped structure 111 and a tooth profile of the second tooth-shaped structure 121 are identical, such that the structure is more stable when the driving gear 10 meshes with the first tooth-shaped structure 111 and the second tooth-shaped structure 121 simultaneously; and under the action of the spring 33, the teeth on the driving gear 10 tightly mesh with the first tooth-shaped structure 111 and the second tooth-shaped structure 121, thereby eliminating the clearance and reducing the possibility of looseness.

In some embodiments, tooth spacing of the first tooth-shaped structure 111 and tooth spacing of the second tooth-shaped structure 121 are identical, such that the structure is more stable when the driving gear 10 meshes with the first tooth-shaped structure 111 and the second tooth-shaped structure 121 simultaneously; and under the action of the spring 33, the teeth on the driving gear 10 tightly mesh with the first tooth-shaped structure 111 and the second tooth-shaped structure 121, thereby eliminating the clearance and reducing the possibility of looseness.

In some embodiments, an adjusting member is arranged between the first toothed plate 11 and the second toothed plate 12, and the adjusting member is configured to allow the second toothed plate to tend to move upwards relative to the first toothed plate 11, such that the first tooth-shaped structure 111 and the second tooth-shaped structure 121 clamp the teeth on the driving gear 10, that is, the teeth on the driving gear 10 tightly mesh with the first tooth-shaped structure 111 and the second tooth-shaped structure 121, thus the effect of eliminating the clearance may be achieved and the possibility of loosening is reduced. The adjusting member may be a spring or other mechanism that allows a tendency to move upwards to be generated between the first toothed plate 11 and the second toothed plate 12.

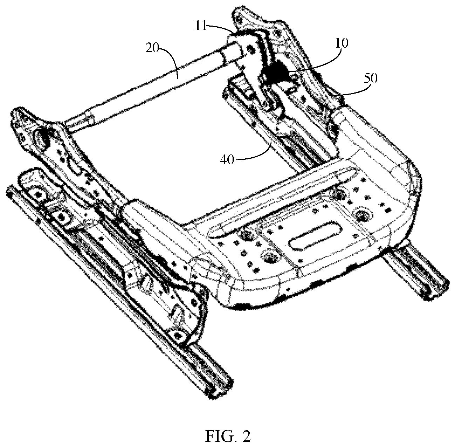

As illustrated in FIG. 2, the seat provided by embodiments of the present disclosure includes: a base 40, a seat frame 50, and an adjusting mechanism provided by embodiments of the present disclosure. Two ends of the rear transverse tube 20 are rotatably connected to side plates of the seat frame 50, respectively, with a simple structure and easy operation, such that the entire mechanism is more flexible, and its practicality is improved. An end of the first toothed plate 11 away from the rear transverse tube 20 and an end of the second toothed plate 12 away from the rear transverse tube 20 are rotatably connected to the base 40. Optionally, the base 40 is provided with a sliding rail, the sliding rail is provided with a sliding block slidably connected to the sliding rail. The end of the first toothed plate 11 away from the rear transverse tube 20 and the end of the second toothed plate 12 away from the rear transverse tube 20 are hinged with the sliding block. The driving gear 10 is arranged on the seat frame 50.

Optionally, a connecting rod is also arranged between the base 40 and the seat frame 50; and a four-bar link mechanism is formed between the base 40, the first toothed plate 11 and the second toothed plate 12, the seat frame 50, and the connecting rod. The first toothed plate 11 and the second toothed plate 12 are driving parts that drive the movement of the four-bar linkage mechanism. When in use, the driving gear 10 is rotated and drives the first toothed plate 11 and the second toothed plate 12 to rotate; and a rear transverse rod, the first toothed plate 11, and the second toothed plate 12 rotate relative to the sliding block and the seat frame 50. Due to the four-bar linkage mechanism, the connecting rod rotates relative to the base 40 and the seat frame 50, thereby achieving the rise or fall of the seat frame 50 and achieving the lifting function of the seat. Since there is the reset assembly between the first toothed plate 11 and the second toothed plate 12, the reset assembly applies the tension to the first toothed plate 11 and the second toothed plate 12, and the reset assembly is connected to the first toothed plate 11 and the second toothed plate 12, such that the second toothed plate 12 tends to rotate relative to the first toothed plate 11. The first toothed plate 11 and the second toothed plate 12 move towards each other through the reset assembly, such that the closed point is formed between the second toothed plate 12 and the driving gear 10 when meshing. In this state, the first toothed plate 11 and the driving gear 10 have one closed point, the second toothed plate 12 and the driving gear 10 have one closed point, and under the j oint action of the first toothed plate 11 and the second toothed plate 12, the clearance of the mechanism is eliminated. Even after a long period of time, the first toothed plate 11 and the second toothed plate 12 are tensioned by the redundant pretightening force of the reset assembly, such that assembly clearance meets the design requirements, thereby solving the problem of shaking and abnormal sound under adjustment.

A vehicle provided by embodiments of the present disclosure includes a seat provided by embodiments of the present disclosure. Since the vehicle provided by embodiments of the present disclosure has the same advantages as the seat provided by embodiments of the present disclosure, it is not repeated herein.

In summary, the adjusting mechanism, the seat, and the vehicle provided by embodiments of the present disclosure achieve that the adjusting mechanism may still be ensured a small movement clearance after a long time use, reducing the abnormal sound and jerking under adjustment caused by excessive clearance.

It should be noted that in the present disclosure, relative terms such as "first" and "second" are only used to distinguish one entity or operation from another entity or operation, and do not necessarily require or imply any such actual relationship or order between these entities or operations. Furthermore, the term "include", "comprise" or any other variation thereof is intended to cover nonexclusive inclusions such that a process, method, article, or device comprising a series of elements includes not only those elements, but also other elements that are not expressly listed, or also includes elements inherent in such a process, method, article, or device. Without further limitation, an element defined by the phrase "comprising a ..." does not exclude the presence of additional identical elements in the process, method, article, or device comprising the element.

In the description of the present invention, it should be understood that the orientation or position relationship indicated by the terms "center", "longitudinal", "transverse", "length", "width", "thickness", "up", "down", "front", "rear", "left", "right", "vertical", "horizontal", "top", "bottom", "inner", "outer", "clockwise", "counterclockwise", "axial", "radial" and "circumferential" and the like, is based on the orientation or position relationship shown in the accompanying drawings, which is only for the convenience of describing the present invention and simplifying the description, and does not indicate or imply that the referred device or element must have a specific orientation, and be constructed and operated in a specific orientation, so it cannot be understood as a limitation of the present invention.

In the present invention, unless otherwise expressly defined, terms such as "install/mount", "interconnect", "connect", "fix" shall be understood broadly, and may be, for example, fixed connections, detachable connections, or integral connections; may also be mechanical or electrical connections; may also be direct connections or indirect connections via intervening media; may also be inner communications or interactions of two elements. For those skilled in the art, the specific meaning of the above terms in the present invention may be understood according to the specific situations.

In the present invention, unless otherwise expressly defined, the first feature "below", "under", "on bottom of', "above", "on", or "on top of" a second feature may include an embodiment in which the first feature is in direct contact with the second feature, or the first feature is in indirect contact with the second feature through an intermediate media. And, the first feature "above", "on", or "on top of" a second feature may include an embodiment in which the first feature is right or obliquely "above", "on", or "on top of" the second feature, or just means that the first feature is at a height higher than that of the second feature. A first feature "below", "under", or "on bottom of" a second feature may include an embodiment in which the first feature is right or obliquely "below", "under", or "on bottom of' the second feature, or just means that the first feature is at a height lower than that of the second feature.

In the description of the present specification, the description referring to terms such as "an embodiment", "some embodiments", "an example", "a specific example" or "some examples" means that a particular feature, structure, material, or characteristic described in connection with the embodiment or example is included in at least one embodiment or example of the present invention. Thus, the appearances of these terms in various places throughout this specification are not necessarily referring to the same embodiment or example of the present invention. Furthermore, the particular features, structures, materials, or characteristics may be combined in any suitable manner in one or more embodiments or examples. In addition, without contradiction, those skilled in the art may combine and unite different embodiments or examples or features of the different embodiments or examples described in this specification.

The above description is only specific embodiments of the present disclosure, such that those skilled in the art may understand or implement the present disclosure. Various modifications to these embodiments will be apparent to those skilled in the art, and the general principles defined herein may be implemented in other embodiments without departing from the scope of the present disclosure. Therefore, the present disclosure will not be limited to the embodiments described herein, but is to be accorded the widest scope consistent with the principles and novel features disclosed herein.

## Claims

1. An adjusting mechanism, comprising: a driving gear (10), a first toothed plate (11), and a second toothed plate (12);
wherein the first toothed plate (11) is provided with a first tooth-shaped structure (111), the second toothed plate (12) is provided with a second tooth-shaped structure (121), the first tooth-shaped structure (111) and the second tooth-shaped structure (121) are arranged side by side, and both the first tooth-shaped structure (111) and the second tooth-shaped structure (121) mesh with the driving gear (10); and
wherein a reset assembly is arranged between the first toothed plate (11) and the second toothed plate (12), and is configured to allow the second toothed plate (12) to tend to rotate relative to the first toothed plate (11).

2. The adjusting mechanism according to claim 1, wherein the reset assembly comprises a torsion spring comprising a first leg and a second leg; and
the first leg is connected to the first toothed plate (11), and the second leg is connected to the second toothed plate (12), such that a torque of the torsion spring enable the second toothed plate (12) to tend to rotate relative to the first toothed plate (11).

3. The adjusting mechanism according to claim 1 or 2, wherein the reset assembly comprises a first pin shaft (31), a second pin shaft (32), and a spring (33); the first pin shaft (31) is connected to the first toothed plate (11), the second pin shaft (32) is connected to the second toothed plate (12), and two ends of the spring (33) are connected to the first pin shaft (31) and the second pin shaft (32), respectively, such that the second toothed plate (12) tends to rotate relative to the first toothed plate (11) under the tension or elasticity of the spring (33).

4. The adjusting mechanism according to claim 3, wherein the first toothed plate (11) defines a first avoidance hole (112) arranged opposite to the second pin shaft (32);
and/or, the second toothed plate (12) defines a second avoidance hole (122) arranged opposite to the first pin shaft (31).

5. The adjusting mechanism according to claim 3 or 4, further comprising a rear transverse tube (20), wherein the first toothed plate (11) and the second toothed plate (12) are arranged at intervals in an extension direction of the rear transverse tube (20);
an axis of the first pin shaft (31) and an axis of the rear transverse tube (20) are coplanar and form a first plane;
an axis of the second pin shaft (32) and the axis of the rear transverse tube (20) are coplanar and form a second plane; and
an angle between the first plane and the second plane is greater than 0°.

6. The adjusting mechanism according to claim 5, wherein the first toothed plate (11) is fixedly connected to the rear transverse tube (20); and the second toothed plate (12) is rotatably connected to the rear transverse tube (20).

7. The adjusting mechanism according to any one of claims 1 to 6, wherein a tooth profile of the first tooth-shaped structure (111) and a tooth profile of the second tooth-shaped structure (121) are identical.

8. The adjusting mechanism according to any one of claims 1 to 7, wherein an adjusting member is arranged between the first toothed plate (11) and the second toothed plate (12), and the adjusting member is configured to allow the second toothed plate to tend to move upwards relative to the first toothed plate (11).

9. A seat, comprising: a base (40), a seat frame (50) and an adjusting mechanism according to any one of claims 1 to 8;
wherein two ends of a rear transverse tube (20) are rotatably connected to side plates of the seat frame (50), respectively;
an end of the first toothed plate (11) away from the rear transverse tube (20) and an end of the second toothed plate (12) away from the rear transverse tube (20) are rotatably connected to the base (40); and
the driving gear (10) is arranged on the seat frame (50).

10. A vehicle, comprising a seat according to claim 9.
